# EUROPEAN PATENT SPECIFICATION

(11) **EP 1 906 048 B1**
(45) Date of publication and mention of the grant of the patent: **11.11.2009**
(21) Application number: 07019091.3
(22) Date of filing: 27.09.2007
(51) Int. Cl.: F16F 9/512

(54) **Damping force generating mechanism for shock absorber**
Mechanismus zum Erzeugen von Dämpfungskraft für einen Stoßdämpfer
Mécanisme de génération de force d'amortissement pour amortisseur

(30) Priority: 28.09.2006 JP 2006265153; 20.03.2007 JP 2007072174
(43) Date of publication of application: 02.04.2008
(73) Proprietor: KAYABA INDUSTRY CO., LTD., Minato-ku, Tokyo 105-6190 (JP)
(72) Inventor: Chikamatsu, Satoshi c/o Kayaba Industry Co., Ltd., Tokyo 105-6190 (JP); Watanabe, Kouichi c/o Kayaba Industry Co., Ltd, Tokyo 105-6190 (JP)
(74) Representative: Grünecker, Kinkeldey, Stockmair & Schwanhäusser Anwaltssozietät

(56) References cited:
- JP-A- 7 167 191
- JP-A- 9 291 961
- US-A1- 2005 115 786

## Description

### FIELD OF THE INVENTION

This invention relates to a damping force generating mechanism provided in a shock absorber.

### BACKGROUND OF THE INVENTION

Document US 2005/0115786 A1 discloses a damping force generating mechanism according to preamble of present claim 1.

A hydraulic shock absorber for a vehicle comprises, for example, two fluid chambers separated in the interior of a cylinder by a piston, and a passage provided through the piston to connect these fluid chambers. A damping valve in the form of a leaf valve is provided at an outlet of the passage to generate a damping force relative to displacement of the piston. The leaf valve generally comprises a plurality of stacked leaves having a fixed inner circumferential part, and lifts an outer circumferential part to open the passage according to the differential pressure between the upstream and downstream of the leaves. With this construction, the damping force generated by the leaf valve tends to be excessive when in a middle to high speed region of piston displacement.

In order to improve the damping force characteristic of a leaf valve, JPH09-291961A, published by the Japan Patent Office in 1997, proposes a leaf valve in which the inner circumferential part is not fixed but supported resiliently by a coil spring.

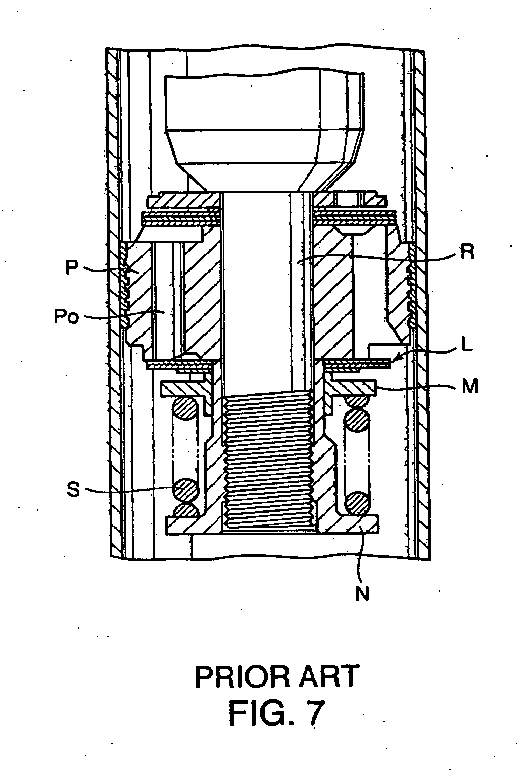

Referring to FIG. 7, in a shock absorber in which this leaf valve is installed, a cylindrical piston nut N is secured onto a tip of a piston rod R penetrating the piston P. The leaf valve L closing an outlet of a passage Po which passes through the piston P is fitted on the outer circumference of the piston nut N such that it can displace in an axial direction. A coil spring S an end of which is supported by the piston nut N, resiliently supports the inner circumferential part of the leaf valve L via a push member M.

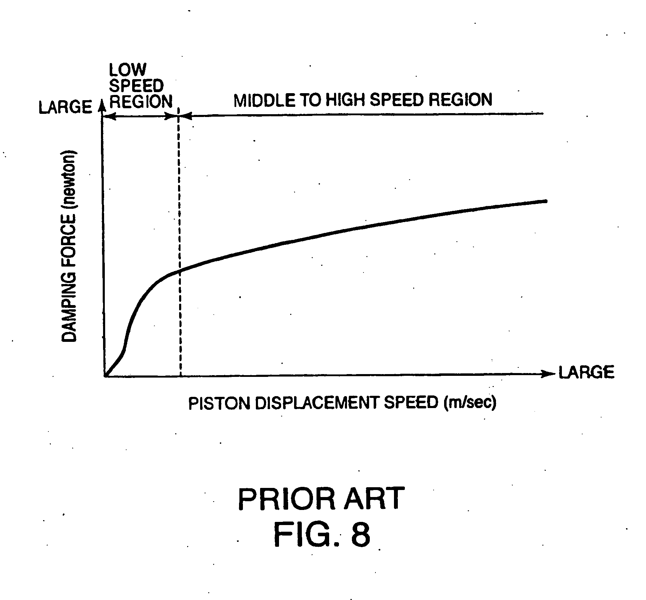

When the piston P moves upward in the figure, working oil in an oil chamber above the piston P flows into an oil chamber below the piston P via the passage Po and a damping force is generated due to a flow resistance of the leaf valve L at the outlet of the passage Po. When the piston displacement speed is in a low speed region, the leaf valve L bends the outer circumferential part downward in the figure from the inner circumferential part supported by the push member M. As the piston displacement speed reaches the middle to high speed region, the pressure in the passage Po becomes greater than the resilient force of coil spring S such that the leaf valve L retreats from the piston P downward in an axial direction together with the push member M. As a result, the opening area of the leaf valve L becomes large so that the damping force is suppressed from becoming excessive. As shown in FIG. 8, the damping force increase is gradual with respect to an increase in the piston displacement speed even in the middle to high speed region.

### SUMMARY OF THE INVENTION

This valve structure is effective in suppressing an excessive increase in the damping force generated in the middle to high speed region of piston displacement. Since the leaf valve L is kept in a retreated position once the piston displacement speed has reached the middle to high speed region of piston displacement, the damping force characteristic does not vary as long as the piston displacement speed varies in this region. When a spring load is set to obtain a preferable damping force in the middle speed region, therefore, the damping force generated in the high speed region may become insufficient.

It is therefore an object of this invention to provide a damping force generating mechanism which realizes different damping force characteristics in the middle speed region and the high speed region of piston displacement so that a preferable damping force is obtained in the respective speed regions.

In order to achieve the above object, this invention provides a damping force generating mechanism for a shock absorber according to the present claim 1.

The details as well as other features and advantages of this invention are set forth in the remainder of the specification and are shown in the accompanying drawings.

### BRIEF DESCRIPTION OF THE DRAWINGS

FIG. 1 is a longitudinal sectional view of essential parts of a shock absorber including a damping force generating mechanism according to this invention.

FIG. 2 is a diagram showing the characteristic of a damping force generated by the damping force generating mechanism.

FIG. 3 is a timing chart showing variation in the damping force generated by the damping force generating mechanism.

FIG. 4 is a longitudinal sectional view of essential parts of a shock absorber including a damping force generating mechanism according to a second embodiment of this invention.

FIG. 5 is similar to FIG. 4 but shows a third embodiment of this invention.

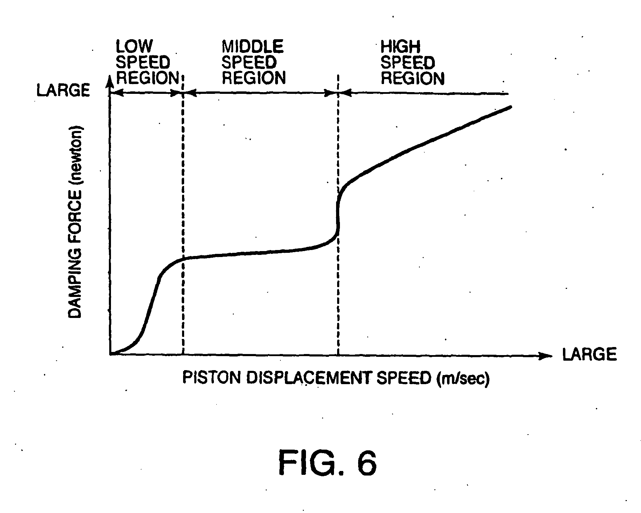

FIG. 6 is a diagram showing the characteristic of a damping force generated by the damping force generating mechanism according to the third embodiment of this invention.

FIG. 7 is a longitudinal sectional view of essential parts of a shock absorber including a damping force generating mechanism according to the prior art.

FIG. 8 is a diagram showing the characteristic of a damping force generated by the damping force generating mechanism according to the prior art.

### DESCRIPTION OF THE PREFERRED EMBODIMENTS

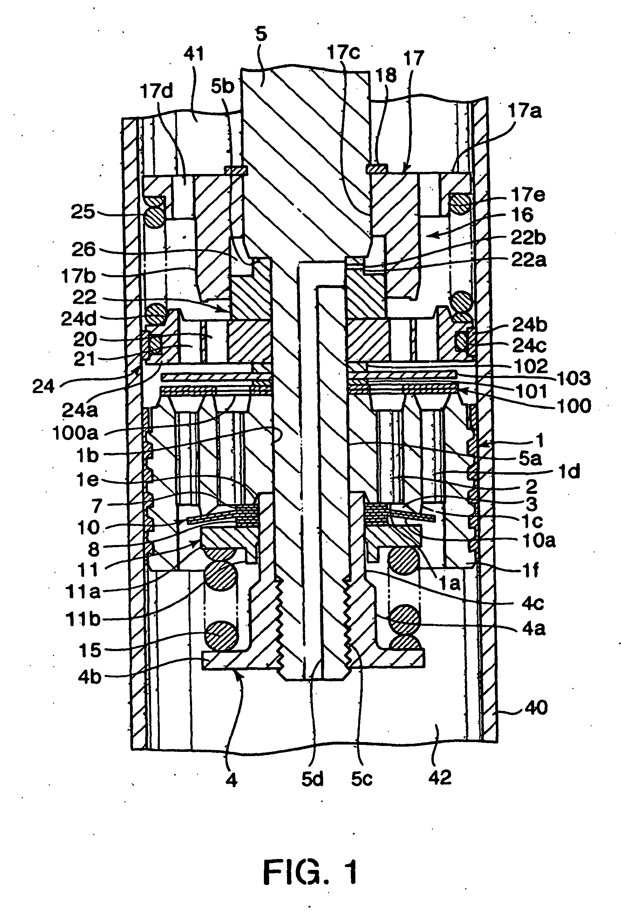

Referring to FIG. 1 of the drawings, a hydraulic shock absorber for a vehicle comprises a cylinder 40, a piston 1 enclosed in the cylinder 40 so as to be free to slide in an axial direction, and a piston rod 5 connected to the piston 1 and projecting axially from the cylinder 40.

The piston rod 5 has a small diameter part 5a formed at its lower end via a step 5b. The small diameter part 5a penetrates a through-hole 1b formed in the piston 1. A cylindrical part 4a of a piston nut 4 is screwed onto a male screw part formed at a lower end of the small diameter part 5a. The outer circumferential part If of the piston 1 slides on the inner circumference of the cylinder 40.

The piston 1 is fixed to the small diameter part 5a. The interior of the cylinder 40 is separated by the piston 1 into a first oil chamber 41 located above the piston 1 and a second oil chamber 42 located below the piston 1. Working oil is enclosed in the first oil chamber 41 and the second oil chamber 42. The first oil chamber 41 and the second oil chamber 42 communicate with each other via passages 2 and passages 1d formed respectively as through-holes in the piston 1.

Although not shown in the drawings, a reservoir or an air chamber is provided inside or outside the cylinder 40 as a known component of a hydraulic shock absorber to compensate for capacity variation in the cylinder 40 due to elongation and contraction of the piston rod 5 with respect to the cylinder 40.

A damping valve 100 is provided at openings of the passages 1d formed on an upper end face of the piston 1 facing the first oil chamber 41. The damping valve 100 generates a damping force during contraction of the shock absorber, in which the piston 1 displaces downward in the figure, by resisting a flow of working oil from the shrinking second oil chamber 42 to the expanding first oil chamber 41 through the passages 1d. The damping valve 100 is constituted by a leaf valve and also functions as a check valve that prevents a reverse flow in the passages 1d. Holes 100a are formed such that the damping valve 100 does not prevent the working oil from flowing through the passages 2.

A damping valve 10 is provided at openings 3 of the passages 2 formed on a lower end face 1a of the piston 1 facing the second oil chamber 42. The piston 1 has a skirt portion at its lower end and a space surrounded by the skirt portion is used to accommodate the damping valve 10. Owing to this construction, the entire length of a piston part of the shock absorber from the upper end face of the piston 1 to the lower end of the piston nut 4 can be shortened while ensuring the length of the sliding surface of the piston 1.

The damping valve 10 generates a damping force during elongation of the shock absorber in which the piston 1 displaces upward in the figure, by resisting the flow of working oil from the shrinking first oil chamber 41 to the expanding second oil chamber 42 through the passages 2. The damping valve 10 also functions as a check valve which prevents a reverse flow in the passages 2.

The damping valve 10 is constituted by a leaf valve that has a plurality of stacked leaves covering the openings of the passages 2. More specifically, the damping valve 10 comprises a washer 7, the leaves 10a, a washer 8, a push member 11, and a coil spring 15.

The washer 7, the plural leaves 10a, the washer 8, and the push member 11 are fitted on the outer circumference of a small diameter part 4c of the piston nut 4 which is formed continuously with the cylindrical part 4a and projects upward therefrom. The washer 7 is in contact with the lower end face 1a of the piston 1. The leaves 10a are gripped between the washers 7 and 8. The push member 11 applies a resilient force of the coil spring 15 to the washer 8 upward.

The push member 11 comprises a cylindrical part 11b which slides on the outer circumference of the small diameter part 4c and a disk part 11a which extends in a radial direction from the top end of the cylindrical part 11b. The coil spring 15 is interposed between the disk part 11a and a flange 4b which is formed at the bottom of the cylindrical part 4a of the piston nut 4.

The cylindrical part 11b has a function of centering the coil spring 15 and thereby ensuring the resilient force of the coil spring 15 to be applied evenly to the push member 11. It should be noted however that the cylindrical part 11b can be omitted.

A circular valve seat 1c projecting downward is formed on the lower end face 1a of the piston 1 to surround the openings of the passages 2 and face the outer circumference of the leaves 10a. The damping valve 10 closes the openings 3 of the passages 2 by causing the leaves 10a to be seated on the valve seat 1c. Further, although not shown in the figure, the leaves 10a have a minute notch or minute notches on the outer circumference that connects the passages 2 and the second oil chamber 42 even when the openings 3 are closed by the leaves 10a. It is also possible to form a minute orifice or minute orifices on the valve seat 1c by stamping instead of providing a notch or notches on the leaves 10a. Providing such a passage or passages having a minute flow sectional area in the damping valve is known in the art.

The number of the leaves 10a depends on the required damping force characteristic, or in other words the required relationship between the piston displacement speed and the generated damping force. A single leaf may be used depending on the required damping force characteristic. Further, it is possible to stack plural leaves 10a having different diameters depending on the required damping force characteristic.

According to the construction of the damping valve 10 as described above, the inner circumferential part of the leaves 10a are pressed against the lower end face 1a of the piston 1 by the push member 11 that applies the resilient force of the coil spring 15. Herein, the thickness of the washer 7 is set to be smaller than the distance from the lower end face 1a of the piston 1 to the crest of the valve seat 1c in the axial direction, thereby providing an initial bend to the leaves 10a.

By regulating the amount of the initial bend, the opening pressure with which the leaves 10a are lifted off the valve seat 1c to open the passages 2 can be regulated. The amount of the initial bend can be regulated by altering the thickness of the washer 7 or stacking a plurality of the washers 7. The amount of the initial bend should therefore be set such that the best damping force characteristic is obtained for the vehicle that uses the shock absorber. The washer(s) 7 may be omitted depending on the distance in the axial direction from the lower end face 1a to the crest of the valve seat 1c.

A disc spring, leaf spring, or resilient material such as rubber may be used to apply resilient force on the leaves 10a instead of the coil spring 15.

Next, a pressure responsive throttle 16 with which the hydraulic shock absorber is provided will be described.

The pressure-responsive throttle 16 is disposed above the piston 1.

A pressure chamber partitioning member 22, a disk-shaped member 24, a spacer 102, a valve stopper 103 and a washer 101 are disposed above the piston 1. These members are fitted on the outer circumference of the small diameter part 5a of the piston rod 5 in this order from above such that the pressure chamber partitioning member 22 is in contact with the step 5b and gripped between the step 5b and the piston nut 4 together with the piston 1. The piston 1 has a recess 1e on the lower end face 1a to accommodate the tip of the small diameter part 4 of the piston nut 4.

The valve stopper 103 faces the damping valve 100 and keeps a distance corresponding to the thickness of the washer 101 from the damp[ing valve 100 so as to prevent deformation of the damping valve 100 beyond the valve stopper 103.

The disk-shaped member 24 comprises a disk-shaped main body 24a, and a slide ring 24b fixed onto the outer circumference of the main body 24a via an O-ring 24c. The slide ring 24b slides on the inner circumference of the cylinder 40. The disk-shaped member 24 displaces in the cylinder in the axial direction together with the piston 1. The O-ring 24c has a function to prevent working oil from flowing through a gap between the outer circumference of the disk-shaped member 24 and the inner circumference of the cylinder 40.

The disk-shaped member 24 has a plurality of ports 20 and 21 penetrating the main body 24a. The ports 20 communicate permanently with the passages 2 and the ports 21 communicate permanently with the first oil chamber 41.

The pressure chamber partitioning member 22 is a cylindrical member having a small diameter part 22a at its upper end. The pressure chamber partitioning member 22 is gripped between the piston nut 4 and the step 5b of the piston rod 5 together with the piston 1 and the disk-shape member 24, and thereby fixed to the piston rod 5 such that an end of the small diameter part 22a is in contact with the step 5b.

A spool 17 is fitted onto the outer circumference of the piston rod 5 above the step 5b so as to be free to slide in the axial direction. The spool 17 is formed into a cylindrical shape having a bottom 17b facing upward. A through-hole 17c is formed in the center of the bottom 17a so as to allow the piston rod 5 to penetrate. The spool 17 comprises a flange which projects radially from the bottom 17a. The flange has communication holes 17d passing therethrough so as to allow the working oil to flow beyond the spool 17 within the first oil chamber 41. The cylindrical part 17b of the spool 17 has a downward opening. The pressure chamber partitioning member 22 is fitted into the inner circumference of the cylindrical part 17b from below so as to be free to slide in the cylindrical part 17b in the axial direction. By setting the inner diameter of the cylindrical part 17b to be greater than the outer diameter of the piston rod 5, an annular pressure chamber 26 is formed in the spool 17 by the pressure chamber partitioning member 22 and the piston rod 5 when the pressure chamber partitioning member 22 is inserted into the cylindrical part 17b of the spool 17. The tip of the cylindrical part 17b has a shape and a dimension that allow the tip 17b to close the opening of the ports 20.

In order to introduce pressure into the pressure chamber 26 from the second oil chamber 42, a pilot passage 5d is formed through the small diameter part 5a of the piston rod 5. Further, an orifice 22b connecting the pilot passage 5d with the pressure chamber 26 is formed in the pressure chamber partitioning member 22.

A coil spring 25 is interposed between the spool 17 and the disk-shaped member 24. An upper end of the coil spring 25 is supported by am outer circumferential part of the flange of the spool 17, and positioned by a step 17e formed on the outer circumference of the flange of the spool 17. A lower end of the coil spring 25 is supported by an outer circumferential part of the disk-shaped member 24, and positioned by a step 24d formed on the outer circumference of the disk-shaped main body 24a. Positioning the ends of the coil spring 25 using the steps 17e, 24d is preferable for preventing the center axis of the coil spring 25 from becoming offset from that of the cylinder 40.

The coil spring 25 applies a resilient force on the spool 17 in a direction that causes the spool 17 to retreat from the disk-shaped member 24, or in other words a direction for supplementing the action of the pressure in the pressure chamber 26. The displacement of the spool 17 in this direction is limited by a stop ring 18 fitted onto the outer circumference of the piston rod 5. This position of the spool 17 is expressed as a retreated position.

The pressure in the first oil chamber 42 pushes the spool 17 downward due to a difference in the upward and downward-facing receiving areas of the spool 17. On the other hand, the pressure in the pressure chamber 26 and the resilient force of the coil spring 25 act upward on the spool 17. The spool 17 displaces downward relative to the pressure chamber partitioning member 22 when the differential pressure between the first oil chamber 41 and the second oil chamber 42 exceeds a predetermined pressure as a result of an increase in the upward piston displacement speed. The downward displacing spool 17 finally closes the opening of the ports 20 of the disk-shaped member 24 by the tip of the cylindrical part 17b.

The damping valve 10 and the pressure-responsive throttle 16 function as described below.

When the piston 1 displaces upward in the cylinder 40, or in other words when the shock absorber elongates, the first oil chamber 41 shrinks and the second oil chamber 42 expands. According to this action, the working oil in the first oil chamber 41 flows into the second oil chamber 42 via the ports 20, 21, the passages 2, and the damping valve 10.

When the piston displacement speed is very low, the opening pressure acting on the damping valve 10 is too low to cause the leaves 10a, which are under the initial bend, to open the passages 2. The working oil in the passages 2 flows into the second oil chamber 42 via the notch(es) formed in the leaves 10a or the orifice(s) formed in the valve seat 1c as described above. Since the flow rate of working oil flowing into the second oil chamber 42 is very small in this state, the damping force generated by the damping valve 10 is also very small.

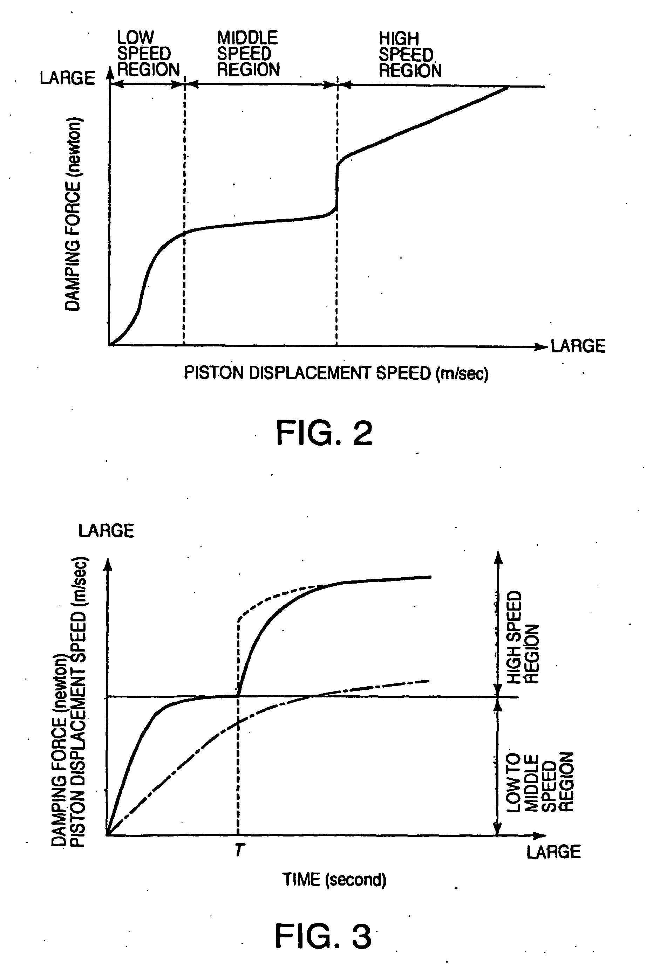

As the piston displacement speed increases, the leaf 10a bends downward from the outer rim of the washer 8 and the flow cross-sectional area of the working oil flowing out from the passages 2 into the second oil chamber 42 increases. The damping force generated by the damping valve 10 in this state depends on the elastic deformation of the leaves 10a, and increases sharply with respect to an increase in the piston displacement speed, as shown in the low speed region in FIG. 2.

When the piston displacement speed reaches the middle speed region, the differential pressure between the first oil chamber 41 and the second oil chamber 42 increases further, and the leaves 10a move downward in FIG. 1 against the resilient force of the coil spring 15. As the leaves 10a move downward, the flow cross-sectional area of the opening 3 of the passages 2 increases greatly. The distance between the leaves 10a and the opening 3 of the passages 2 increases as the piston displacement speed increases, and hence an increase in the damping force generated by the damping valve 10 in the middle speed region of piston displacement is much more gentle than in the low speed region, as shown in FIG. 2.

When the piston displacement speed reaches the high speed region, the pushing force acting on the leaves 10a downward in FIG. 1 increases further and the distance between the leaves 10a and the opening 3 of the passages 2 increases further. However, in the high speed region, the pressure-responsive throttle 16 displaces the spool 17 downward in FIG. 1 from the retreated position against the resilient force of the coil spring 25 and the pressure in the pressure chamber 26, and hence the ports 20 are finally closed by the spool 17.

It should be noted that the spring load characteristic of the coil spring 25 is set in advance such that the spool 17 closes the ports 20 when the piston displacement speed reaches the high speed region. According to this setting of the spring load of the coil spring 25, the pressure-responsive throttle 16 does not operate as long as the piston displacement speed stays in the middle speed region or low speed region, and the damping force accompanying the flow of working oil from the first oil chamber 41 to the second oil chamber 42 in these speed regions is generated exclusively in the damping valve 10.

When the ports 20 are closed by the spool 17, the working oil in the first oil chamber 41 flows into the second oil chamber 42 only via the ports 21. Due to the reduction in the flow cross-sectional area caused by closing the ports 20, the pressure loss in the working oil flowing from the first oil chamber 41 to the second oil chamber 42 increases in a step-wise fashion with respect to an increase in the piston displacement speed. Further, the damping force generated by the damping valve 10 in the high speed region increases at a higher rate than in the middle speed region, as shown in FIG. 2.

According to this damping force generating mechanism, therefore, different damping force characteristics are obtained in the low speed region, the middle speed region, and the high speed region

FIG. 2 shows a relation between the damping force and the piston displacement speed in a steady operation state, and in FIG. 2, it appears that the damping force immediately increases in a step-wise fashion when the piston displacement speed reaches the high speed region. However, since the pressure chamber 26 is connected to the second oil chamber 42 via the orifice 22b, the pressure variation in the pressure chamber 26 always has a delay. Due to this delay, some time is required from when the spool 17 starts to move until the ports 20 are closed.

Referring to FIG. 3, as the piston displacement speed indicated by a single-dotted line increases, and reaches the high speed region at a time *T,* the spool 17 of the pressure-responsive throttle 16 starts to move downward. In a case where the orifice 22b is not provided in the passage connecting the second oil chamber 42 and the pressure chamber 26, the spool 17 immediately closes the ports 20 when the differential pressure between the first oil chamber 41 and the second oil chamber 42 reaches the high speed region at the time *T*, and the generated damping force increases sharply in a step-wise fashion at the time *T,* as shown by a broken line in the figure. However, in the pressure-responsive throttle 16 in which the orifice 22b is provided, there is a time delay from when the spool 17 starts to move until it closes the ports 20. Accordingly, the increase in the damping force is gentler, as shown by the solid line in the figure. Thus, the damping force characteristic of the pressure-responsive throttle 16 does not cause the driver or passengers of the vehicle to feel discomfort or a shock, when it operates.

As described hereintofore, according to this damping force generating mechanism, when the piston displacement speed stays within the middle speed region, the increase rate of the damping force is suppressed to be small, whereas when the piston displacement speed reaches the high speed region, the damping force as well as its increase rate increase notably in comparison to the middle speed region. Accordingly, a sufficient damping force is generated in the high speed region of piston displacement to fully damp the vibration of the vehicle such that a favorable degree of vehicle riding comfort is obtained.

Further, when the amplitude of oscillation is great as is the case when the shock absorber reaches the most elongated position and the piston displacement speed reaches the high speed region, the damping force increases sharply such that the piston displacement speed falls promptly. A shock accompanying full elongation of the shock absorber can thereby be mitigated.

On the other hand, when the piston 1 displaces downward in FIG. 1 in the cylinder 40, or in other words when the shock absorber contracts, the second oil chamber 42 shrinks and the first oil chamber 41 expands. According to this action, the working oil in the second oil chamber 42 flows into the first oil chamber 41 via the passages 1d, and the damping valve 100 generates a damping force. The deformation of the damping valve 100 is limited by the valve stopper 103 and hence the damping valve 100 does not come into contact with the disk-shaped member 24. The damping valve 100 therefore does not interrupt the flow of working oil in the ports 20 and 21 of the disk-shaped member 24.

In this embodiment, the outer circumference of the disk-shaped member 24 is designed to slide on the inner circumference of the cylinder 40, and the passages 2 and the passages 1d are separated from the first oil chamber 41 by the disk-shaped member 24. However, a gap may be provided between the outer circumference of the disk-shaped member 24 and the inner circumference of the cylinder 40 while forming the disk-shaped member 24 in a cap-shape to cover the upper end face of the piston 1 such that it can disconnect the passages 2 from the first oil chamber 41. By arranging the disk-shaped member 24 not to slide on the inner circumference of the cylinder 40, the frictional resistance of the shock absorber decreases, and smooth elongation/contraction of the absorber is further ensured.

Although the pressure-responsive throttle 16 is arranged to close the ports 20 in this embodiment, the function required of the pressure-responsive throttle 16 is to reduce the flow cross-sectional area of working oil. In view of this requirement, it is also possible to arrange the pressure-responsive throttle 16 so as not to fully close the ports 20 but merely to narrow the flow path. This arrangement can be materialized by providing a stopper that limits the downward displacement of the spool 17 before it reaches a fully closed position of the ports 20.

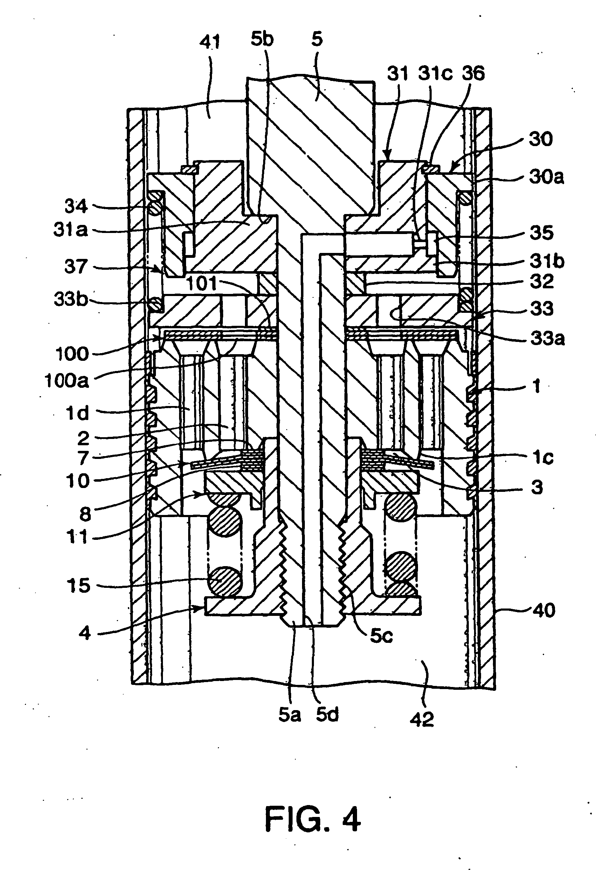

Referring to FIG. 4, a second embodiment of this invention will be described.

This embodiment replaces the pressure-responsive throttle 16 of the first embodiment with a pressure-responsive throttle 37.

The pressure-responsive throttle 37 comprises a washer 101, a disk-shaped member 33, a spacer 32, and a pressure chamber partitioning member 31 fitted onto the outer circumference of the small diameter part 5a between the damping valve 100 and the step 5b of the piston rod 5. These members are fixed to the small diameter part 5a by securing the piston nut 4 onto the male screw part 5c of the piston rod 5 as in the case of the first embodiment.

A gap is provided between the disk-shaped member 33 and the inner circumference of the cylinder 40. Working oil can flow through this gap. The disk-shaped member 33 has ports 33a passing therethrough in the axial direction.

The pressure chamber partitioning member 31 is formed into a cylindrical shape having a bottom 31a which the small diameter part 5a penetrates. The bottom 31 is in contact with the step 5b of the piston rod 5. The pressure chamber partitioning member 31 comprises a flange 31b at the lower end thereof.

The pressure-responsive throttle 37 further comprises a spool 30 and a coil spring 34. The spool 30 is formed into a cylindrical shape and fitted onto the outer circumference of the cylindrical pressure chamber partitioning member 31 so as to be free to slide in the axial direction. A flange is formed on the upper end of the spool 30. The coil spring 34 is disposed between the flange 30a and the outer circumferential part of the disk-shaped member 33 positioned by a step 33b.

The inner circumference of the lower end of the spool 30 is set to be greater than the outer circumference of the pressure chamber partitioning member 31 such that the outer circumference of the flange 31b of the pressure chamber partitioning member 31 slides on the inner circumference of the lower end of the spool 30. According to this setting, an annular pressure chamber 35 is formed between the inner circumference of the lower end of the spool 30 and the outer circumference of the pressure chamber partitioning member 31. An orifice 31 c is provided in the pressure chamber partitioning member 31 that connects the pilot passage 5d and the pressure chamber 35.

The coil spring 34 exerts a resilient force on the spool 30 in a direction that causes the spool 30 to retreat from disk-shaped member 33, or in other words a direction for subsidizing the pressure in the pressure chamber 35. The displacement of the spool 30 in this direction is limited by a stop ring 35 fitted onto the outer circumference of the pressure chamber partitioning member 31. This position of the spool 30 is expressed as the retreated position.

The spool 30 is pushed downward in FIG. 4 by the pressure in the first oil chamber 41. On the other hand, the spool 30 is pushed upward in FIG. 4 by the pressure in the pressure chamber 35 which is introduced from the second oil chamber 42 via the orifice 31c and the resilient force of the coil spring 34. When the differential pressure between the first oil chamber 41 and the pressure chamber 35 exceeds a predetermined pressure as a result of an increase in the upward piston displacement speed, the spool 30 displaces towards the disk-shaped member 33 and finally closes the ports 33a.

In this embodiment, when the piston displacement speed is in the low speed region or in the middle speed region, while the piston 1 displaces upward in FIG. 4, the spool 30 of the pressure-responsive throttle 37 is maintained in the retreated position as shown in the figure, thereby allowing working oil to move between the ports 33a and the first oil chamber 41. When the piston displacement speed reaches the high speed region, the spool 30 approaches the disk-shaped member 33 against the resilient force of the coil spring 34 and the pressure in the pressure chamber 35, and finally closes the ports 33a. The function of the damping valve 10 is identical to that of the first embodiment.

According to this embodiment, as long as the piston displacement speed stays in the middle speed region, the damping force increase rate is suppressed to be relatively small, and when the piston displacement speed reaches the high speed region, the damping force as well as its increase rate are increased with respect to their counter parts in the middle speed region. Accordingly, the damping force does not become insufficient in the high speed region of piston displacement, and the shock absorber can sufficiently suppress oscillation to ensure a favorable degree of riding comfort in the vehicle.

Further, when the amplitude of the oscillation is great and the piston displacement speed reaches the high speed region as is the case when the shock absorber elongates to an elongation limit, the generated damping force increases greatly to decelerate the piston displacement speed. This action helps to mitigate a shock that is generated when the shock absorber reaches the elongation limit.

Since the pressure chamber 35 is connected to the second oil chamber 42 via the orifice 31c, it takes some time until the spool 30 closes the ports 33a after the piston displacement speed has reached the high speed region. According to this construction of the damping force generating mechanism, even when the piston displacement speed varies quickly from the middle speed region to the high speed region, the damping force does not vary abruptly, but instead varies smoothly as time elapses. The driver or passenger(s) of the vehicle therefore does not feel discomfort or shock due to abrupt change in the damping force.

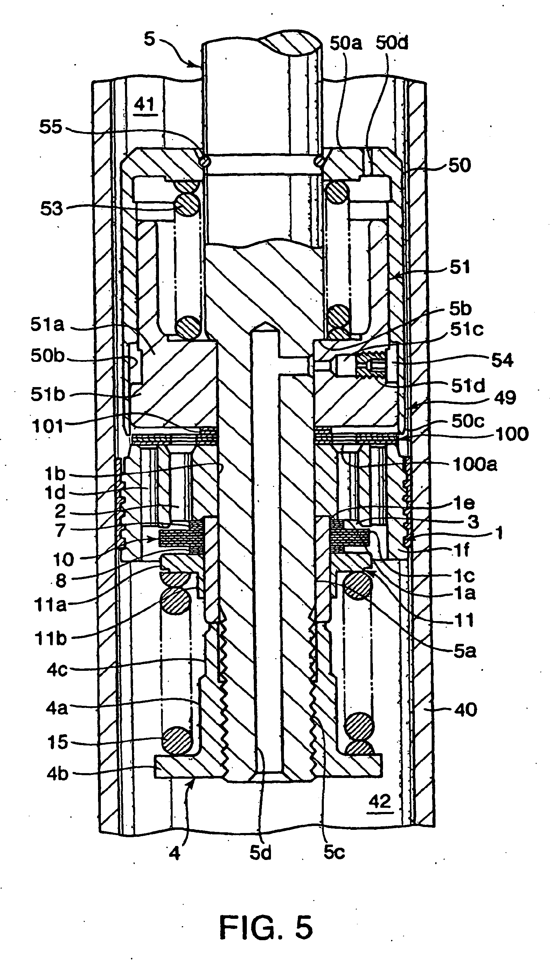

Referring to FIG. 5, a third embodiment of this invention will be described.

This embodiment replaces the pressure-responsive throttle 16 of the first embodiment with a pressure-responsive throttle 49.

The pressure-responsive throttle 49 comprises a washer 101, and a pressure chamber partitioning member 51 fitted on the outer circumference of the small diameter part 5a between the damping valve 100 and the step 5b of the piston rod 5. These members are fixed to the piston rod 5 by securing the piston nut 4 onto the male screw part 5c of the piston rod 5, as in the case of the first embodiment.

A gap is provided between the pressure chamber partitioning member 51 and the inner circumference of the cylinder 40 such that working oil can flow through this gap. The pressure chamber partitioning member 51 is formed into a cylindrical shape with a bottom 51a which the small diameter part 5a of the piston rod 5 penetrates. The bottom 51a is in contact with the step 5b of the piston rod 5.

The pressure-responsive throttle 49 further comprises a spool 50 and a coil spring 53. The spool 50 is formed into a cylindrical shape having a bottom 50a facing upward. The piston rod 5 penetrates the center of the bottom 50a. The inner circumference of the cylindrical part of the spool 50 slides on the outer circumference of the pressure chamber partitioning member 51. A large inner diameter part 50b is formed on the tip of the spool 50. A flange 51b is formed on the lower tip of the pressure chamber partitioning member 51. The large inner diameter part 50b of the spool 50 is in contact with the outer circumference of the flange 51b, thereby forming an annular pressure chamber 54 between the inner circumference of the lower end of the spool 50 and the outer circumference of the pressure chamber partitioning member 51. A passage 51 c is formed in the pressure chamber partitioning member 51 to connect the pressure chamber 54 and the pilot passage 5d. An orifice 51d is provided in the passage 51c.

The coil spring 53 is interposed between the bottom 50a of the spool 50 and the bottom 51a of the pressure chamber partitioning member 51. The coil spring 53 exerts a resilient force on the spool 50 in a direction that causes the spool 50 to retreat from the pressure chamber partitioning member 51, or in other words a direction for subsidizing the pressure in the pressure chamber 54. The displacement of the spool 50 in this direction is limited by a stop ring 55 fitted onto the outer circumference of the piston rod 5. This position of the spool 50 is expressed as the retreated position. A chamber partitioned by the spool 50 and the pressure chamber partitioning member 51 to accommodate the coil spring 53 is connected to the first oil chamber 42 via a through-hole 50d formed through the bottom 50d of the spool 50.

The inner diameter of the large diameter part 50b of the spool 50 is set to be greater than the outer diameter of the damping valve 100. According to this setting, when the spool 50 displaces downward in the figure, the upper end face of the piston 1 including the damping valve 100 is covered by the large diameter part 50b such that the passages 2 are disconnected from the first oil chamber 41. It is also possible to set the inner diameter of the large diameter part 50b smaller than the outer diameter of the damping valve 100 such that the tip of the downwardly displaced spool 50 becomes in contact with the damping valve 100. Meanwhile, a notch 50c having a minute cross-sectional area is formed on the tip of the spool 50 such that the passages 2 are not fully shut off from the first oil chamber 41. Instead of forming the notch 50c, it is also possible to construct the spool 1 such that a gap remains between the downwardly displaced spool 50 and the piston 1.

In this embodiment, as long as the piston displacement speed is in the low speed region or the middle speed region when the piston 1 displaces upward in FIG. 5 in the cylinder 40, the spool 50 of the pressure-responsive throttle 49 is kept in the retreated position, as shown in the figure, thereby allowing working oil to move between the passages 2 and the first oil chamber 41. When the piston displacement speed reaches the high speed region, the spool 50 approaches the piston 1 against the resilient force of the coil spring 53 and the pressure in the pressure chamber 54, and finally closes the passages 2. The function of the damping valve 10 is identical to that of the first embodiment.

Also, according to this embodiment, as long as the piston displacement speed stays in the middle speed region, the damping force increase rate is suppressed to be relatively small, and when the piston displacement speed reaches the high speed region, the damping force and its increase rate increase with respect to their counterparts in the middle speed region. Accordingly, the damping force does not become insufficient in the high speed region of piston displacement, and the shock absorber can sufficiently suppress oscillation to ensure a favorable degree of riding comfort in the vehicle.

Further, when the amplitude of the oscillation is great and the piston displacement speed reaches the high speed region as is the case when the shock absorber elongates to an elongation limit, the generated damping force increases greatly to decelerate the piston displacement speed. This action helps to mitigate a shock that is generated when the shock absorber reaches the elongation limit.

Since the pressure chamber 54 is connected to the second oil chamber 42 via the orifice 51d, it takes some time until the spool 52 shuts off the passages 2 after the piston displacement speed has reached the high speed region. When the piston displacement speed varies from the middle speed region to the high speed region, therefore, the damping force does not vary abruptly, but instead varies smoothly as time elapses. The driver or passenger(s) of the vehicle therefore does not feel discomfort or shock due to abrupt change in the damping force.

According to this invention, the spool 17, 30, 50 displaces in response to a differential pressure between the pressure in the first oil chamber 41 and the pressure in the second oil chamber 42 led to the pressure chamber 26, 35, 54. In other words the differential pressure between the first oil chamber 41 and the second oil chamber 42 determines the damping force generated by the shock absorber. Accordingly, the damping force characteristic of the shock absorber can be set precisely and easily.

Further, according to this invention, the pressures in the oil chambers 41, 42 are exerted on the spool 17, 30, 50 directly, and hence a preferable operation characteristic of the spool 17, 30, 50 is obtained such that the spool 17, 30, 50 does not affect the damping force in the middle speed region, whereas it displaces promptly as soon as the piston displacement speed reaches the high speed region.

The contents of Tokugan 2006-265153, with a filing date of September 29, 2006 in Japan and Tokugan 2007-072174 with a filing date of March 20, 2007 in Japan are hereby incorporated by reference.

Although the invention has been described above with reference to certain embodiments of the invention, the invention is not limited to the embodiments described above. Modifications and variations of the embodiments described above will occur to those skilled in the art, within the scope of the claims.

For example, in the embodiments described above, the leaves 10a of the damping valve 10 are arranged to displace in the axial direction, but this invention does not depend on the structure of the damping valve. The pressure-responsive throttle according to this invention can vary the damping force characteristic in the high speed region of piston displacement independently from the damping force characteristics in other speed regions even when this invention is applied to a shock absorber provided with a damping valve in which the inner circumference of the leaves is fixed such that the damping force is generated depending only on elastic deformation of the leaves.

The damping force generating mechanism according to this invention may also be applied to generation of damping force during the contraction of a shock absorber. The pressure-responsive throttle may be fitted to a base valve, rather than the piston of the embodiments described above. In short, this invention can be applied to any damping force generating mechanism that generates a damping force accompanying fluid flow between two fluid chambers in a shock absorber.

## Claims

1. A damping force generating mechanism for a shock absorber, the shock absorber comprising a cylinder (40) in which a first fluid chamber (41) and a second fluid chamber (42) are formed, and a passage (2, 20, 21, 33a) connecting the first and second fluid chambers (41, 42), the mechanism comprising:
a damping valve (10) that resists a fluid flow in the passage (2, 20, 21, 33a) from the first fluid chamber (41) to the second fluid chamber (42); and
a pressure-responsive throttle (16, 37, 49) which is disposed between the passage (2, 20, 33a) and the first fluid chamber (41) and reduces a flow cross-sectional area of the passage (2, 20, 33a) when a fluid pressure in the first fluid chamber (41) increases beyond a fluid pressure in the second fluid chamber (42) by more than a predetermined pressure;
**characterized in that**
the pressure-responsive throttle (16, 37, 49) comprises:
a spool (17, 30, 50) which closes at least a part of an opening of the passage (2, 20, 21, 33a) to the first fluid chamber (41) by displacing in an axial direction of the cylinder (40), the spool (17, 30, 50) comprising a pressure receiving area of the fluid pressure in the first fluid chamber (41) and a pressure receiving area of the fluid pressure in the second fluid chamber (42);
a pressure chamber (26, 35, 54) formed to face the pressure receiving area of the fluid pressure in the second fluid chamber (42), the fluid pressure in the second fluid chamber (42) being introduced into the pressure chamber (26, 35, 54) through a pilot path (5d).

2. The damping force generating mechanism as defined in Claim 1, **characterized in that** the damping valve (10) comprises a leaf valve disposed at an opening of the passage (2) to the second fluid chamber (42), the leaf valve comprising a leaf that elastically deforms depending on a differential pressure between the passage (2) and the second fluid chamber (42) to increase a flow cross-sectional area.

3. The damping force generating mechanism as defined in Claim 2, **characterized in that** the leaf valve is arranged to retreat from the opening of the passage (2) to further increase the flow cross-sectional area when the differential pressure between the passage (2) and the second fluid chamber (42) is greater than a set pressure.

4. The damping force generating mechanism as defined in Claim 3, **characterized in that** the shock absorber comprises a piston (1) that is accommodated in the cylinder (40) so as to be free to slide and separates the first fluid chamber (41) from the second fluid chamber (42) in the cylinder (40), the leaf valve is arranged to deform in a first speed region of piston displacement and retreat from the opening of the passage (2) in a second speed region that is higher than the first speed region, and the pressure-responsive throttle (16, 37, 49) is arranged to reduce the flow cross-sectional area of the passage (2, 20, 33a) in a third speed region that is higher than the second speed region.

5. The damping force generating mechanism as defined in any one of Claim 2 through Claim 4, **characterized in that** the leaf valve comprises a minute opening that allows a small amount of fluid to flow from the passage (2) to the second fluid chamber (42) irrespective of the differential pressure between the passage (2) and the second fluid chamber (42).

6. The damping force generating mechanism as defined in any one of Claim 1 through Claim 5, **characterized in that** the shock absorber comprises, a piston (1) that is accommodated in the cylinder (40) so as to be free to slide and separates a first fluid chamber (41) and a second fluid chamber (42) in the cylinder (40), and a piston rod (5) that is fixed to the piston (1) and penetrates the first fluid chamber (41), and the passage (2) penetrates the piston (1) and the spool (17, 30, 50) is fitted onto the outer circumference of the piston rod (5) in a state where the spool (17, 30, 50) can displace in the axial direction.

7. The damping force generating mechanism as defined in Claim 6, **characterized in that** the pressure-responsive throttle (16, 37, 49) comprises a disk-shaped member (24) which slides on an inner circumference of the cylinder (40) together with the piston (1), the passage (2, 20, 21, 33a) comprises plural parallel branch passages (20, 21) which penetrate the disk-shaped member (24), and the spool (17) is arranged to close a specific passage (20) of the plural parallel branch passages (20, 21).

8. The damping force generating mechanism as defined in Claim 6, **characterized in that** the pressure-responsive throttle (16, 37, 49) comprises a disk-shaped member (33) which displaces in the cylinder (40) together with the piston (1) and has a smaller outer diameter than the inner diameter of the cylinder (40), the passage (2, 20, 21, 33a) comprises a first passage (33a) penetrating the disk-shaped member (33) and a second passage which is constituted by a gap formed between the disk-shaped member (33) and the cylinder (40), and the spool (30) is arranged to close the first passage (33a).

9. The damping force generating mechanism as defined in Claim 6, **characterized in that** the spool (50) is formed into a cap-shape which can cover the opening of the passage (2, 20, 33a) to the first fluid chamber (41).

10. The damping force generating mechanism as defined in any one of Claim 6 through Claim 9, **characterized by** a second passage (1d) which penetrates the piston (1) to cause fluid to flow from the second fluid chamber (42) to the first fluid chamber (41), and a second damping valve (100) that resists a fluid flow in the second passage (2, 20, 21, 33a).

11. The damping force generating mechanism as defined in any one of Claim 1 through Claim 9, **characterized by** an orifice (22b, 31c, 51d) narrowing the pilot path (5d); and a spring (25, 34, 53) exerting a resilient force on the spool (17, 30, 50) in a direction to increase the opening of the passage (2, 20, 21, 33a) facing the first fluid chamber (41).

## Patentansprüche

1. Dämpfkraft-Erzeugungsmechanismus für einen Stoßdämpfer, wobei der Stoßdämpfer einen Zylinder (40), in dem eine erste Fluidkammer (41) und eine zweite Fluidkammer (42) ausgebildet sind, und einen Kanal (2, 20, 21, 33a) umfasst, der die erste und die zweite Fluidkammer (41, 42) verbindet, wobei der Mechanismus umfasst:
ein Dämpfventil (10), das einem Fluidstrom in dem Kanal (2, 20, 21, 33a) von der ersten Fluidkammer (41) zu der zweiten Fluidkammer (42) Widerstand entgegensetzt; und
eine auf Druck ansprechende Drossel (16, 37, 49), die zwischen dem Kanal (2, 20, 33a) und der ersten Fluidkammer (41) angeordnet ist und eine Strömungsquerschnittsfläche des Kanals (2, 20, 33a) reduziert, wenn ein Fluiddruck in der ersten Fluidkammer (41) um mehr als einen vorgegebenen Druck über einen Fluiddruck in der zweiten Fluidkammer (42) hinaus ansteigt;
**dadurch gekennzeichnet, dass**
die auf Druck ansprechende Drossel (16, 37, 49) umfasst:
einen Steuerkolben (17, 30, 50), der durch Verschiebung in einer axialen Richtung des Zylinders (40) wenigstens einen Teil einer Öffnung des Kanals (2, 20, 21, 33a) zu der ersten Fluidkammer (41) verschließt, wobei der Steuerkolben (17, 30, 50) einen Druckaufnahmebereich des Fluiddrucks in der ersten Fluidkammer (41) und einen Druckaufnahmebereich des Fluiddrucks in der zweiten Fluidkammer (42) umfasst;
eine Druckkammer (26, 35, 54), die so ausgebildet ist, dass sie dem Druckaufnahmebereich des Fluiddrucks in der zweiten Fluidkammer (42) zugewandt ist, wobei der Fluiddruck in der zweiten Fluidkammer (42) über einen Vorsteuerweg (5d) in die Druckkammer (26, 35, 54) eingeleitet wird.

2. Dämpfkraft-Erzeugungsmechanismus nach Anspruch 1, **dadurch gekennzeichnet, dass** das Dämpfventil (10) ein Membranventil umfasst, das an einer Öffnung des Kanals (2) zu der zweiten Fluidkammer (42) angeordnet ist, wobei das Membranventil eine Membran umfasst, die sich in Abhängigkeit von einer Druckdifferenz zwischen dem Kanal (2) und der Fluidkammer (42) elastisch verformt, um eine Strömungsquerschnittsfläche zu vergrößern.

3. Dämpfkraft-Erzeugungsmechanismus nach Anspruch 2, **dadurch gekennzeichnet, dass** das Membranventil so eingerichtet ist, dass es sich von der Öffnung des Kanals (2) wegbewegt, um die Strömungsquerschnittsfläche weiter zu vergrößern, wenn die Druckdifferenz zwischen dem Kanal (2) und der zweiten Fluidkammer (42) größer ist als ein Solldruck.

4. Dämpfkraft-Erzeugungsmechanismus nach Anspruch 3, **dadurch gekennzeichnet, dass** der Stoßdämpfer einen Kolben (1) umfasst, der in dem Zylinder (40) so aufgenommen ist, dass er frei gleitet und die erste Fluidkammer (41) von der zweiten Fluidkammer (42) in dem Zylinder (40) trennt, wobei das Membranventil so eingerichtet ist, dass es sich in einem ersten Geschwindigkeitsbereich der Kolbenverschiebung verformt und sich in einem zweiten Geschwindigkeitsbereich, der über dem ersten Geschwindigkeitsbereich liegt, von der Öffnung des Kanals (2) wegbewegt, und die auf Druck ansprechende Drossel (16, 37, 49) so eingerichtet ist, dass sie die Strömungsquerschnittsfläche des Kanals (2, 20, 33a) in einem dritten Geschwindigkeitsbereich reduziert, der über dem zweiten Geschwindigkeitsbereich liegt.

5. Dämpfkraft-Erzeugungsmechanismus nach einem der Ansprüche 2 bis 4, **dadurch gekennzeichnet, dass** das Membranventil eine sehr kleine Öffnung umfasst, die zulässt, dass eine geringe Menge an Fluid unabhängig von der Druckdifferenz zwischen dem Kanal (2) und der zweiten Fluidkammer (42) aus dem Kanal (2) zu der zweiten Fluidkammer (42) strömt.

6. Dämpfkraft-Erzeugungsmechanismus nach einem der Ansprüche 1 bis 5, **dadurch gekennzeichnet, dass** der Stoßdämpfer einen Zylinder (40), einen Kolben (1), der so in dem Zylinder (40) aufgenommen ist, dass er frei gleitet und eine erste Fluidkammer (41) und eine zweite Fluidkammer (42) in dem Zylinder (40) trennt, sowie eine Kolbenstange (5) umfasst, die an dem Kolben (1) befestigt ist und sich durch die erste Fluidkammer (41) hindurch erstreckt und der Kanal (2) durch den Kolben (1) verläuft und der Steuerkolben (17, 30, 50) in einem Zustand, in dem der Steuerkolben (17, 30, 50) in der axialen Richtung verschoben werden kann, auf den Außenumfang der Kolbenstange (5) aufgepasst ist.

7. Dämpfkraft-Erzeugungsmechanismus nach Anspruch 6, **dadurch gekennzeichnet, dass** die auf Druck ansprechende Drossel (16, 37, 49) ein scheibenförmiges Element (24) umfasst, das an einem Innenumfang des Zylinders (40) zusammen mit dem Kolben (1) gleitet, wobei der Kanal (2, 20, 21, 33a) mehrere parallele Teilkanäle (20, 21) umfasst, die durch das scheibenförmige Element (24) verlaufen, und der Steuerkolben (17) so eingerichtet ist, dass er einen bestimmten Kanal (20) der mehreren parallelen Teilkanäle (20, 21) verschließt.

8. Dämpfkraft-Erzeugungsmechanismus nach Anspruch 6, **dadurch gekennzeichnet, dass** die auf Druck ansprechende Drossel (16, 37, 49) ein scheibenförmiges Element (33) umfasst, das in dem Zylinders (40) zusammen mit dem Kolben (1) verschoben wird und einen Außendurchmesser hat, der kleiner ist als der Innendurchmesser des Zylinders (40), wobei der Kanal (2, 20, 21, 33a) einen ersten Kanal (33a), der durch das scheibenförmige Element (33) verläuft, und einen zweiten Kanal umfasst, der durch einen Zwischenraum gebildet wird, der zwischen dem scheibenförmigen Element (33) und dem Zylinder (40) ausgebildet ist, und der Steuerkolben (30) so eingerichtet ist, dass er den ersten Kanal (33a) verschließt.

9. Dämpfkraft-Erzeugungsmechanismus nach Anspruch 6, **dadurch gekennzeichnet, dass** der Steuerkolben (50) in einer Kappenform ausgebildet ist, die die Öffnung des Durchlasses (2, 20, 33a) zu der ersten Fluidkammer (41) abdecken kann.

10. Dämpfkraft-Erzeugungsmechanismus nach einem der Ansprüche 6 bis 9, **gekennzeichnet durch** einen zweiten Kanal (1d), der **durch** den Kolben (1) verläuft, um Fluid zu veranlassen, von der zweiten Fluidkammer (42) zu der ersten Fluidkammer (41) zu strömen, sowie **durch** ein zweites Dämpfventil (100), das einem Fluidstrom in dem zweiten Kanal (23) Widerstand entgegensetzt.

11. Dämpfkraft-Erzeugungsmechanismus nach einem der Ansprüche 1 bis 9, **gekennzeichnet durch** eine Blende (22b, 31c, 51d), die den Vorsteuerweg (5d) verengt, sowie **durch** eine Feder (25, 34, 53), die eine elastische Kraft auf den Steuerkolben (17, 30, 50) in einer Richtung ausübt, in der die Öffnung des Kanals (2, 20, 21, 33a) vergrößert wird, die der ersten Fluidkammer (41) zugewandt ist.

## Revendications

1. Mécanisme de génération de force d'amortissement pour un amortisseur, l'amortisseur comprenant un cylindre (40) dans lequel une première chambre de fluide (41) et une seconde chambre de fluide (42) sont formées, et un passage (2, 20, 21, 33a) raccordant les première et seconde chambres de fluide (41, 42), le mécanisme comprenant :
un clapet d'amortissement (10) qui résiste à un écoulement de fluide dans le passage (2, 20,21, 33a) de la première chambre de fluide (41) à la seconde chambre de fluide (42) ; et
un papillon des gaz sensible à la pression (16, 37, 49) qui est disposé entre le passage (2, 20, 33a) et la première chambre de fluide (41) et réduit une surface transversale d'écoulement du passage (2, 20, 33a) lorsqu'une pression de fluide dans la première chambre de fluide (41) augmente au-delà d'une pression de fluide dans la seconde chambre de fluide (42) d'une valeur supérieure à une pression prédéterminée ;
**caractérisé en ce que** :
le papillon des gaz sensible à la pression (16, 37, 49) comprend :
un tiroir cylindrique (17, 30, 50) qui ferme au moins une partie d'une ouverture du passage (2, 20, 21, 33a) vers la première chambre de fluide (41) en se déplaçant dans une direction axiale du cylindre (40), le tiroir cylindrique (17, 30, 50) comprenant une zone de réception de pression de la pression de fluide dans la première chambre de fluide (41) et une zone de réception de pression de la pression de fluide dans la seconde chambre de fluide (42) ;
une chambre de pression (26, 35, 54) formée pour faire face à la zone de réception de pression de la pression de fluide dans la seconde chambre de fluide (42), la pression de fluide dans la seconde chambre de fluide (42) étant introduite dans la chambre de pression (26, 35, 54) par une trajectoire pilote (5d).

2. Mécanisme de génération de force d'amortissement selon la revendication 1, **caractérisé en ce que** le clapet d'amortissement (10) comprend une soupape à lamelle disposée au niveau d'une ouverture du passage (2) vers la seconde chambre de fluide (42), la soupape à lamelle comprenant une lamelle qui se déforme élastiquement en fonction d'une pression différentielle entre le passage (2) et la seconde chambre de fluide (42) pour augmenter une surface transversale d'écoulement.

3. Mécanisme de génération de force d'amortissement selon la revendication 2, **caractérisé en ce que** la soupape à lamelle est agencée pour se reculer de l'ouverture du passage (2) afin d'augmenter davantage la surface transversale d'écoulement lorsque la pression différentielle entre le passage (2) et la seconde chambre de fluide (42) est supérieure à une pression prédéterminée.

4. Mécanisme de génération de force d'amortissement selon la revendication 3, **caractérisé en ce que** l'amortisseur comprend un piston (1) qui est logé dans le cylindre (40) afin d'être libre de coulisser et sépare la première chambre de fluide (41) de la seconde chambre de fluide (42) dans le cylindre (40), la soupape à lamelle est agencée pour se déformer dans une première région de vitesse de déplacement du piston et se reculer de l'ouverture du passage (2) dans une deuxième région de vitesse qui est supérieure à la première région de vitesse, et le papillon des gaz sensible à la pression (16, 37, 49) est agencé pour réduire la surface transversale d'écoulement du passage (2, 20, 33a) dans une troisième région de vitesse qui est supérieure à la deuxième région de vitesse.

5. Mécanisme de génération de force d'amortissement selon l'une quelconque des revendications 2 à 4, **caractérisé en ce que** la soupape à lamelle comprend une minuscule ouverture qui permet l'écoulement d'une petite quantité de fluide du passage (2) à la seconde chambre de fluide (42) indépendamment de la pression différentielle entre le passage (2) et la seconde chambre de fluide (42).

6. Mécanisme de génération de force d'amortissement selon l'une quelconque des revendications 1 à 5, **caractérisé en ce que** l'amortisseur comprend un cylindre (40), un piston (1) qui est logé dans le cylindre (40) afin d'être libre de coulisser et sépare une première chambre de fluide (41) et une seconde chambre de fluide (42) dans le cylindre (40) et une tige de piston (5) qui est fixée sur le piston (1) et pénètre dans la première chambre de fluide (41), et le passage (2) pénètre dans le piston (1) et le tiroir cylindrique (17, 30, 50) est monté sur la circonférence externe de la tige de piston (5) dans un état dans lequel le tiroir cylindrique (17, 30, 50) peut se déplacer dans la direction axiale.

7. Mécanisme de génération de force d'amortissement selon la revendication 6, **caractérisé en ce que** le papillon des gaz sensible à la pression (16, 37, 49) comprend un élément en forme de disque (24) qui coulisse sur une circonférence interne du cylindre (40) conjointement au piston (1), le passage (2, 20, 21, 33a) comprend plusieurs passages de ramification parallèles (20, 21) qui pénètrent dans l'élément en forme de disque (24), et le tiroir cylindrique (17) est agencé pour fermer un passage spécifique (20) de la pluralité de passages de ramification parallèles (20, 21).

8. Mécanisme de génération de force d'amortissement selon la revendication 6, **caractérisé en ce que** le papillon des gaz sensible à la pression (16, 37, 49) comprend un élément en forme de disque (33) qui se déplace dans le cylindre (40) conjointement au piston (1) et a un plus petit diamètre externe que le diamètre interne du cylindre (40), le passage (2, 20, 21, 33a) comprend un premier passage (33a) pénétrant dans l'élément en forme de disque (33) et un second passage qui est constitué par un espace formé entre l'élément en forme de disque (33) et le cylindre (40), et le tiroir cylindrique (30) est agencé pour fermer le premier passage (33a).

9. Mécanisme de génération de force d'amortissement selon la revendication 6, **caractérisé en ce que** le tiroir cylindrique (50) est formé selon une forme de capuchon qui peut recouvrir l'ouverture du passage (2, 20, 33a) vers la première chambre de fluide (41).

10. Mécanisme de génération de force d'amortissement selon l'une quelconque des revendications 6 à 9, **caractérisé par** un second passage (1d) qui pénètre dans le piston (1) pour amener le fluide à s'écouler de la seconde chambre de fluide (42) à la première chambre de fluide (41), et un second clapet d'amortissement (100) qui résiste à un écoulement de fluide dans le second passage (2, 20, 21, 33a).

11. Mécanisme de génération de force d'amortissement selon l'une quelconque des revendications 1 à 9, **caractérisé par** un orifice (22b, 31c, 51d) rétrécissant la trajectoire pilote (5d) ; et un ressort (25, 34, 53) exerçant une force élastique sur le tiroir cylindrique (17, 30, 50) dans une direction afin d'augmenter l'ouverture du passage (2, 20, 21, 33a) faisant face à la première chambre de fluide (41).
